# EUROPÄISCHE PATENTANMELDUNG

(11) **EP 1 897 784 A2**
(43) Veröffentlichungstag der Anmeldung: **12.03.2008**
(21) Anmeldenummer: 07016700.2
(22) Anmeldetag: 25.08.2007
(51) Int. Cl.: B62D 5/04

(54) **Elektromechanische Lenkung**

(30) Priorität: 06.09.2006 DE 102006041718
(71) Anmelder: Volkswagen Aktiengesellschaft, 38436 Wolfsburg (DE)
(72) Erfinder: Huk, André, 38110 Braunschweig (DE)

(57) **Zusammenfassung**

Eine elektromechanische Lenkung umfasst eine Zahnstange (5) mit einem Gewindeabschnitt (13), eine Kugelgewindemutter (10), die an ihrem Innenumfang einen mit Laufrillen (11) versehenen Gewindeabschnitt (12) aufweist und mit diesem über Kugeln (14) mit dem Gewindeabschnitt (13) der Zahnstange (5) in Eingriff steht, ein Lenkgetriebegehäuse (6) und ein Wälzlager (15), über das die Kugelgewindemutter (10) ortsfest drehbar in dem Lenkgetriebegehäuse (6) gelagert ist. Das Wälzlager (15) ist an der Kugelgewindemutter (10) axial versetzt neben dem tragenden Gewindeabschnitt (12) der Kugelgewindemutter (10) angeordnet. Dies ermöglicht eine kompaktere Bauweise und gestattet eine günstige Kugelrückführung.

## Beschreibung

Die Erfindung bezieht sich auf eine elektromechanische Lenkung, umfassend eine Zahnstange mit einem Gewindeabschnitt, eine Kugelgewindemutter, die an ihrem Innenumfang einen mit Laufrillen versehenen Gewindeabschnitt aufweist und mit diesem über Kugeln mit dem Gewindeabschnitt der Zahnstange in Eingriff steht, ein Lenkgetriebegehäuse und ein Wälzlager, über das die Kugelgewindemutter ortsfest drehbar in dem Lenkgetriebegehäuse gelagert ist.

Im Kraftfahrzeugbau werden herkömmliche, hydraulische Lenkungen zunehmend durch elektromechanische Lenkungen ersetzt, bei denen eine den Fahrer unterstützende Hilfskraft nicht mehr hydraulisch sondern elektrisch mittels eines Elektromotors erzeugt wird.

Bei einem ersten Typ elektromechanischer Lenkungen wird der Elektromotor, wie in der EP 1 237 776 B1 dargestellt, koaxial zur Zahnstange angeordnet, so dass dieser unmittelbar die mit der Zahnstange über Kugeln zusammenwirkende Kugelgewindemutter antreiben kann.

Bei einem zweiten Typ elektromechanischer Lenkungen wird der Elektromotor neben der Zahnstange angeordnet und dessen Antriebsmoment auf die Kugelgewindemutter mittels eines Getriebes übertragen. Ein Beispiel für eine solche elektromechanische Lenkung findet sich in der EP 1 237 777 B1. Die hierbei an der Kugelgewindemutter auftretenden Kräfte müssen so im Lenkgetriebegehäuse abgestützt werden, dass die Laufrillen der Gewindeabschnitte möglichst gleichmäßig belastet werden, um einen vorzeitigen Verschleiß auszuschließen. Überdies soll das Laufverhalten der Kugelgewindemutter möglichst konstant bleiben, da andernfalls spürbare Veränderungen der haptischen und akustischen Eigenschaften der Lenkung auftreten können.

Die Erfindung geht formal von einer elektromechanischen Lenkung des zweiten Typs aus, wie sie in der EP 1 237 777 B1 beschrieben ist. Unter beengten Platzverhältnissen ist die dort dargestellte Gestaltung verbesserungsbedürftig.

Davon ausgehend liegt der Erfindung die Aufgabe zugrunde, unter Aufrechterhaltung einer guten Abstützung der Kugelgewindemutter eine kompaktere Bauweise zu realisieren.

Diese Aufgabe wird durch eine elektromechanische Lenkung gemäß Patentanspruch 1 gelöst. Die erfindungsgemäße Lenkung umfasst eine Zahnstange mit einem Gewindeabschnitt, eine Kugelgewindemutter, die an ihrem Innenumfang einen mit Laufrillen versehenen Gewindeabschnitt aufweist und mit diesem über Kugeln mit dem Gewindeabschnitt der Zahnstange in Eingriff steht, ein Lenkgetriebegehäuse und ein Wälzlager, über das die Kugelgewindemutter ortsfest drehbar in dem Lenkgetriebegehäuse gelagert ist. Sie zeichnet sich insbesondere dadurch aus, dass das Wälzlager an der Kugelgewindemutter axial versetzt neben dem tragenden Gewindeabschnitt der Kugelgewindemutter angeordnet ist.

Hierdurch ist es ohne eine Beeinträchtigung des Laufverhaltens der Kugelgewindemutter möglich, das Wälzlager näher an der Achse der Zahnstange anzuordnen, so dass ein Wälzlager mit einem kleineren Außendurchmesser gewählt werden kann. Die hiermit verbundene axiale Verlängerung der Kugelgewindemutter erfolgt in eine verhältnismäßig bauraumunkritische Richtung. Insbesondere bei elektromechanischen Lenkungen, bei denen der Motor nicht koaxial, sondern neben der Zahnstange angeordnet ist, bringt die schlankere Ausgestaltung der Lagerung der Kugelgewindemutter mehr Gestaltungsspielraum in Bezug auf die Anordnung des Elektromotors und einer zwischen diesem und der Kugelgewindemutter vorgesehenen Getriebestufe.

Weitere, vorteilhafte Ausgestaltungen der Erfindung sind in den Patentansprüchen angegeben.

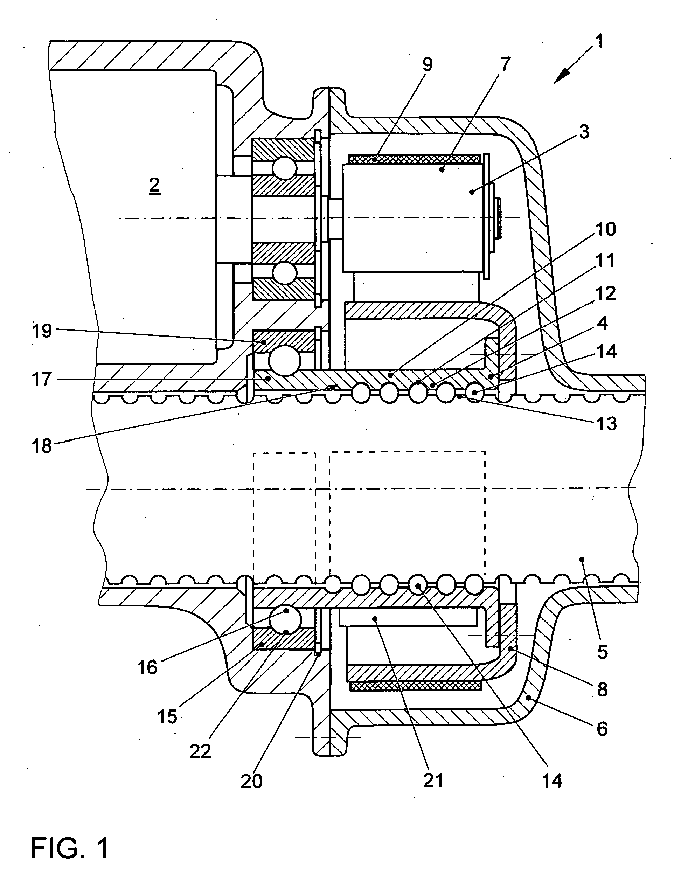

Gemäß einer ersten, vorteilhaften Ausgestaltung ist vorgesehen, dass die Kugelgewindemutter über ihren tragenden Gewindeabschnitt hinaus einen Verlängerungsabschnitt aufweist, an dem außenseitig das Wälzlager angeordnet ist. Hierdurch werden zwei getrennte Funktionsbereiche geschaffen, nämlich ein erster Funktionsbereich für die Lagerung der Kugelgewindemutter im Lenkgetriebegehäuse und ein zweiter Funktionsbereich für den tragenden Gewindeabschnitt. Das axiale versetzen dieser Funktionsbereiche, die in Figur 1 durch unterbrochene Linien angedeutet sind, bietet den Vorteil einer geminderten Beeinflussung untereinander. So werden beispielsweise an der inneren Laufbahn des Wälzlagers auftretende Kräfte und damit verbundene Verformungen nicht an unmittelbar darunterliegende Laufrillen des Gewindeabschnitts weitergegeben und umgekehrt. Hieraus resultiert ein tendenziell verbessertes Verschleißverhalten.

Gemäß einer weiteren, vorteilhaften Ausgestaltung ist eine innere Laufbahn des Wälzlagers integral am Außenumfang der Kugelgewindemutter ausgebildet. Durch die vorstehend erläuterte Trennung der Funktionsbereiche kann der ansonsten gebräuchliche Innenring eines Wälzlagers vollständig entfallen. Dies führt zu einer weiter verschlankten Bauweise.

Vorzugsweise weist die Kugelgewindemutter im Bereich des tragenden Gewindeabschnitts an ihrem Außenumfang einen oder mehrere Kugelrückführkanäle auf. Da dieser Bereich erfindungsgemäß nicht durch ein Wälzlager beeinträchtigt ist, kann für die Kugelrückführungen radial etwas mehr Platz vorgesehen werden, wodurch sich ein gleichmäßiger Geschwindigkeitsverlauf der Kugeln während der Rückführung und somit ein verbessertes Akustikverhalten einstellt.

Dabei kann vorgesehen sein, dass der bzw. die Kugelrückführkanäle radial vom ansonsten im Wesentlichen zylindrischen Außenumfang der Kugelgewindemutter abstehen.

Wie bereits erwähnt, wird das Wälzlager bevorzugt axial versetzt neben dem bzw. den Kugelrückführkanälen angeordnet. Mit Blick auf eine kompakte Bauweise liegen die Wälzkörper des Wälzlagers vorzugsweise radial auf der Höhe der Kugelrückführkanäle.

Die vorstehend beschriebene Lagerung der Kugelgewindemutter kommt vorzugsweise mit genau einen Wälzlager aus.

Ferner kann an der Kugelgewindemutter entweder unmittelbar oder durch Anbringung eines Riemenrads ein Riementrieb angreifen. Jedoch sind auch andere Getriebestufen, wie z. B. ein Zahnradgetriebe möglich, um die Antriebsleistung des Elektromotors auf die Kugelgewindemutter zu übertragen.

Nachfolgend wird die Erfindung anhand eines in der Zeichnung dargestellten Ausführungsbeispiels näher erläutert. Die Zeichnung zeigt in:
- Figur 1: eine Teilsschnittansicht einer elektromechanischen Lenkung nach einem Ausführungsbeispiel der Erfindung.

Das Ausführungsbeispiel bezieht sich auf eine elektromechanische Lenkung 1 für ein Kraftfahrzeug, bei der ein rotatorisches Antriebsmoment eines Elektromotor 2 über eine Getriebestufe 3 und einen Kugelgewindetrieb 4 an einer mit den Fahrzeugrädern gekoppelten Zahnstange 5 als Axialkraft zur Wirkung gebracht wird.

Weiterhin ist ein geteiltes Lenkungsgehäuse 6 zu vorgesehen, das eine Trennfuge im Bereich der Getriebestufe 3 aufweist.

Die Getriebestufe 3 ist hier beispielhaft als Riementrieb mit einem mit dem Elektromotor 2 gekoppelten Antriebsrad 7 und einem mit dem Kugelgewindetrieb 4 gekoppelten Abtriebsrad 8 ausgebildet. Der diese einhüllende Riemen ist mit dem Bezugszeichen 9 versehen.

Anstelle eines Riementriebs kann jedoch auch ein anderes Getriebe, beispielsweise ein Zahnradgetriebe vorgesehen sein.

Die Umsetzung der Rotationsbewegung in eine Translationsbewegung erfolgt in dem Kugelgewindetrieb 4. Dieser umfasst eine Kugelgewindemutter 10, die an ihrem Innenumfang einen mit Laufrillen 11 versehenen Gewindeabschnitt 12 aufweist.

An der Zahnstange 5 befindet sich gegenüberliegend ein entsprechender Gewindeabschnitt 13. Beide Gewindeabschnitte stehen über umlaufende Kugeln 14 miteinander in Eingriff.

Da die Kugelgewindemutter 10 ortsfest, jedoch drehbar im Lenkgetriebegehäuse 6 gelagert ist, führt eine Drehung der Kugelgewindemutter 10 zu einer Translation der Zahnstange 5.

Bei dem dargestellten Ausführungsbeispiel ist die Kugelgewindemutter 10 über ein einziges - Wälzlager 15, das als Festlager ausgebildet ist, im Lenkgetriebegehäuse 6 abgestützt. Figur 1 zeigt beispielhaft ein einreihiges Rillenkugellager 11, jedoch können auch andere Lagertypen zum Einsatz kommen.

Erfindungsgemäß ist vorgesehen, die innere Laufbahn 16 des Wälzlagers 15 möglichst nahe zur Zahnstange 5 hin anzuordnen. Aus diesem Grunde ist das Wälzlager 15 an der Kugelgewindemutter axial versetzt neben dem tragenden Gewindeabschnitt 12 der Kugelgewindemutter 10 angeordnet.

Um gegenseitige Beeinträchtigungen der Laufeigenschaften des Kugelgewindetriebs 4 sowie des Wälzlagers 15 auszuschließen, weist die Kugelgewindemutter 10 einen Verlängerungsabschnitt 17 auf, der über den tragenden Gewindeabschnitt 12 hinausragt. Unter dem tragenden Gewindeabschnitt 12 wird derjenige Teil des Innengewindes an der Kugelgewindemutter 10 verstanden, der tatsächlich mit Kugeln 14 in Eingriff gelangt. Ein fertigungsbedingter Auslauf 18 des Innengewindes in den Verlängerungsabschnitt 17 hinein ist hingegen, mangels Kontakt mit den Kugeln 14, nicht mehr als tragender Gewindeabschnitt 12 zu verstehen.

Die innere Laufbahn 16 des Wälzlagers 15 befindet in einem radialen Bereich um den Verlängerungsabschnitt 17. Geringfügige Überlappungen des Wälzlagers 15 mit dem tragenden Gewindeabschnitt 12 können insoweit toleriert werden, als die innere Laufbahn 16 des Wälzlagers 15 vollständig in den Bereich des Verlängerungsabschnitts 17 fällt.

Das Wälzlager 15 kann prinzipiell mit einem eigenen Innenring und einem eigenen Außenring 19 ausgeführt werden. Bei dem dargestellten Ausführungsbeispiel ist jedoch der Innenring bereits in die Kugelgewindemutter 10, nämlich in deren Verlängerungsabschnitt 17 integriert. Die innere Laufbahn 16 des Wälzlagers 15 befindet sich somit unmittelbar am Außenumfang der Kugelgewindemutter 10.

Der Außenring 19 des Wälzlagers 15 kann hingegen in herkömmlicher Bauart ausgeführt und im Lenkgetriebegehäuse 6 in einer entsprechenden Aufnahmeausnehmung 20 angeordnet und festgelegt werden.

Durch die teilweise Einbeziehung des Wälzlagers 15 in die Kugelgewindemutter 10 lässt sich der Außendurchmesser des Wälzlagers 15 verhältnismäßig klein gestalten. Hierdurch wird, wie Figur 1 entnommen werden kann, für die Anordnung und Lagerung des Elektromotors 2 sowie der Getriebestufe 3 mehr Bauraum gewonnen und insgesamt eine radial kompaktere Bauweise ermöglicht.

Wie Figur 1 weiter zeigt, können am Außenumfang der Kugelgewindemutter 10 im Bereich des tragenden Gewindeabschnitts 12 ein oder mehrere Kugelrückführkanäle 21 vorgesehen werden. Durch die Anordnung des Wälzlagers 15 neben dem tragenden Gewindeabschnitt 12 ist es überdies möglich, diese Kugelrückführkanäle 12 über den ansonsten im Wesentlichen zylindrischen Außenumfang der Kugelgewindemutter 10 hinaus zu erstrecken. Hierdurch lässt sich ein gleichmäßigerer Geschwindigkeitsverlauf der Kugeln 14 während der Rückführung erzielen, wodurch sich die Geräuschemissionen der Lenkung verringern lassen.

Bauraumtechnisch ist das Vorstehen der Kugelrückführkanäle 12 unproblematisch, da diese innerhalb der Getriebestufe 3 bzw. des Riementriebs verlaufen. In der Praxis werden die Kugelrückführkanäle 12 vorzugsweise auf der Höhe der Wälzkörper 22 liegen.

Die Erfindung wurde vorstehend anhand eines bevorzugten Ausführungsbeispiels näher erläutert. Sie ist jedoch nicht auf dieses Ausführungsbeispiel beschränkt, sondern umfasst alle durch die Patentansprüche definierten Ausgestaltungen.

### Bezugszeichenliste

- 1: elektromechanische Lenkung
- 2: Elektromotor
- 3: Getriebestufe
- 4: Kugelgewindetrieb
- 5: Zahnstange
- 6: Lenkgetriebegehäuse
- 7: Antriebsrad
- 8: Abtriebsrad
- 9: Riemen
- 10: Kugelgewindemutter
- 11: Laufrillen
- 12: tragender Gewindeabschnitt der Kugelgewindemutter
- 13: Gewindeabschnitt der Zahnstange
- 14: Kugel
- 15: Wälzlager
- 16: innere Laufbahn des Wälzlagers
- 17: Verlängerungsabschnitt
- 18: Auslauf
- 19: Außenring des Wälzlagers
- 20: Ausnehmungen
- 21: Kugelrückführkanal
- 22: Wälzkörper

## Patentansprüche

1. Elektromechanische Lenkung, umfassend:
- eine Zahnstange (5) mit einem Gewindeabschnitt (13),
- eine Kugelgewindemutter (10), die an ihrem Innenumfang einen mit Laufrillen (11) versehenen Gewindeabschnitt (12) aufweist und mit diesem über Kugeln (14) mit dem Gewindeabschnitt (13) der Zahnstange (5) in Eingriff steht,
- ein Lenkgetriebegehäuse (6), und
- ein Wälzlager (15), über das die Kugelgewindemutter (10) ortsfest drehbar in dem Lenkgetriebegehäuse (6) gelagert ist,
**dadurch gekennzeichnet, dass**
das Wälzlager (15) an der Kugelgewindemutter (10) axial versetzt neben dem tragenden Gewindeabschnitt (12) der Kugelgewindemutter (10) angeordnet ist.

2. Elektromechanische Lenkung nach Anspruch 1, **dadurch gekennzeichnet, dass** die Kugelgewindemutter (10) über den tragenden Gewindeabschnitt (12) hinaus einen Verlängerungsabschnitt (17) aufweist, an dem außenseitig das Wälzlager (15) angeordnet ist.

3. Elektromechanische Lenkung nach Anspruch 1 oder 2, **dadurch gekennzeichnet, dass** das Wälzlager (15) eine innere Laufbahn (16) aufweist, die integral am Außenumfang der Kugelgewindemutter (10) ausgebildet ist.

4. Elektromechanische Lenkung nach einem der Ansprüche 1 bis 3, **dadurch gekennzeichnet, dass** die Kugelgewindemutter (10) im Bereich des tragenden Gewindeabschnitts (12) an ihrem Außenumfang einen oder mehrere Kugelrückführkanäle (21) aufweist.

5. Elektromechanische Lenkung nach Anspruch 4, **dadurch gekennzeichnet, dass** der bzw. die Kugelrückführkanäle (21) radial vom ansonsten im Wesentlichen zylindrischen Außenumfang der Kugelgewindemutter (10) abstehen.

6. Elektromechanische Lenkung nach Anspruch 4 oder 5, **dadurch gekennzeichnet, dass** das Wälzlager (15) axial versetzt neben dem bzw. den Kugelrückführkanälen (21) angeordnet ist.

7. Elektromechanische Lenkung nach einem der Ansprüche 4 bis 6, **dadurch gekennzeichnet, dass** die Wälzkörper (22) des Wälzlagers (15) radial auf der Höhe der Kugelrückführkanäle (21) liegen.

8. Elektromechanische Lenkung nach einem der Ansprüche 1 bis 7, **dadurch gekennzeichnet, dass** die Kugelgewindemutter (10) über genau ein Wälzlager (15) an dem Lenkgetriebegehäuse (6) gelagert ist.

9. Elektromechanische Lenkung nach einem der Ansprüche 1 bis 8, **dadurch gekennzeichnet, dass** ein Riementrieb an der Kugelgewindemutter (10) angreift.
